(19) Europäisches Patentamt
European Patent Office
Office européen des brevets

(11) **EP 2 231 369 B1**

(12) **EUROPÄISCHE PATENTSCHRIFT**

(45) Veröffentlichungstag und Bekanntmachung des Hinweises auf die Patenterteilung:
**24.01.2018 Patentblatt 2018/04**

(21) Anmeldenummer: **08867552.5**

(22) Anmeldetag: **11.12.2008**

(51) Int Cl.:
***B25J 13/08*** *(2006.01)*    ***B25J 19/06*** *(2006.01)*
***G01L 3/10*** *(2006.01)*

(86) Internationale Anmeldenummer:
**PCT/EP2008/010499**

(87) Internationale Veröffentlichungsnummer:
**WO 2009/083111 (09.07.2009 Gazette 2009/28)**

(54) **ROBOTER UND VERFAHREN ZUM ÜBERWACHEN DER MOMENTE AN EINEM SOLCHEN ROBOTER**

ROBOT AND METHOD FOR MONITORING THE TORQUE ON SUCH A ROBOT

ROBOT ET PROCÉDÉ POUR SURVEILLER LES COUPLES SUR UN TEL ROBOT

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **28.12.2007 DE 102007063099**

(43) Veröffentlichungstag der Anmeldung:
**29.09.2010 Patentblatt 2010/39**

(73) Patentinhaber: **KUKA Roboter GmbH**
**86165 Augsburg (DE)**

(72) Erfinder:
• **BISCHOFF, Rainer**
**86163 Augsburg (DE)**
• **HEINZE, Eugen**
**86159 Augsburg (DE)**
• **KURTH, Johannes**
**86163 Augsburg (DE)**
• **SCHREIBER, Günter**
**86316 Friedberg (DE)**
• **ZIMMERMANN, Uwe**
**86152 Augsburg (DE)**
• **KOEPPE, Ralf**
**86199 Augsburg (DE)**

(74) Vertreter: **Ege Lee & Partner**
**Patentanwälte PartGmbB**
**Schirmgasse 268**
**84028 Landshut (DE)**

(56) Entgegenhaltungen:
EP-A- 1 367 314          EP-A2- 1 445 075
DE-A1-102004 030 144     DE-A1-102006 022 889

• HELMICK D ET AL: "A Comparison of Force Sensing Techniques for Planetary Manipulation" AEROSPACE CONFERENCE, 2006 IEEE BIG SKY, MT, USA 04-11 MARCH 2006, PISCATAWAY, NJ, USA,IEEE, 4. März 2006 (2006-03-04), Seiten 1-14, XP010928390 ISBN: 978-0-7803-9545-9
• PETERS R A ET AL: "Uncovering manifold structures in robonaut~s sensory-data state space" HUMANOID ROBOTS, 2005 5TH IEEE-RAS INTERNATIONAL CONFERENCE ON DEC. 5, 2005, PISCATAWAY, NJ, USA,IEEE, 5. Dezember 2005 (2005-12-05), Seiten 369-374, XP010880426 ISBN: 978-0-7803-9320-2

EP 2 231 369 B1

**Beschreibung**

Die Erfindung betrifft einen Roboter mit mindestens zwei Gelenken und über jeweils mindestens ein Gelenk relativ zueinander bewegliche Teile sowie ein Verfahren zum Überwachen von Momenten an einem Roboter, der mindestens zwei Gelenke und über jeweils mindestens ein Gelenk relativ zueinander bewegliche Teile aufweist.

Gegenstand der Erfindung ist ein Roboter grundsätzlich gemäß EN ISO 1018-1 Ziff. 3.18 bzw. EN ISO 8373 Ziff. 2.6 in Form eines automatisch gesteuerten, frei programmierbaren Mehrzweck-Manipulators, der in drei oder mehr Achsen programmierbar ist und entweder in einem festen Ort oder beweglich angeordnet sein kann, ohne dass der Einsatzbereich auf die Automatisierungstechnik eingeschränkt ist, und insbesondere ein Gelenkroboter gemäß EN ISO 1018-1 Ziff. 3.15.5.

Die bisherige Strategie einen Roboter sicher zu machen, besteht darin, ihn durch einen Zaun zu umschließen und dadurch einen Kontakt zwischen Menschen und Robotern zu verhindern. Um die Reichweite, bzw. den Arbeitsraum des Roboters in sicherer Technik zu beschränken, werden seine Achsen durch mechanische Endschalter begrenzt. Dreht der Roboter so weit, dass er eine solche Grenze erreicht, wird er abgeschaltet.

Es besteht das Bestreben, in verstärktem Maße Roboter untereinander und mit Menschen kooperieren zu lassen und dabei soll in letzterem Fall ein Mensch ohne Schutzzaun mit einem Roboter einen Arbeitsraum teilen, um z.B. eine gemeinsame Arbeit auszuführen. Bei solchen Anwendungen spielt die Sicherheit eine entscheidende Rolle. Der Roboter soll für den Menschen keine Gefährdung darstellen. Eine Möglichkeit, den Roboter sicher zu machen, besteht darin seine Kraft oder allgemeiner die kinetische Energie zu begrenzen. Auch die Erkennung einer Kollision und eine geeignete Reaktion hierauf können zu einer höheren Sicherheit des Roboters führen. So wurde schon vorgeschlagen, bewegliche Roboterteile mit äußeren Sensoren zu versehen bzw. zu ummanteln, insbesondere in diversitärer Form durch taktile und kapazitive Sensoren.

Die EP 1 445 075 A2 beschreibt ein Verfahren zum Überwachen von beweglichen Teilen einer Maschine, wie eines Industrieroboters, bei dem Messwerte mindestens zweier unterschiedlicher Messgrößen erfasst und zumindest einer dieser Messwerte derart zu einem ersten Messergebnis verarbeitet wird, dass es mit dem Messwert einer anderen Messgröße oder einem aufgrund desselben gewonnenen zweiten Messergebnis vergleichbar ist, wobei das erste Messergebnis mit dem Messwert einer anderen Messgröße oder bzw. einem aufgrund desselben gewonnenen Messergebnis verglichen wird und ein das Vergleichsergebnis charakterisierende Signal bereitgestellt wird.

Der Erfindung liegt die Aufgabe zugrunde, einen Roboter zu schaffen, der mit Dritten, insbesondere Menschen sicher kooperieren kann. Der Erfindung liegt weiterhin die Aufgabe zugrunde, ein Verfahren zum sicheren Arbeiten eines Roboters anzugeben.

Erfindungsgemäß wird die genannte Aufgabe bei einem Roboter der eingangs genannten Art dadurch gelöst, dass mindestens ein Momente erfassender Sensor an mindestens einem beweglichen Teil angeordnet ist, dass Sensorkomponenten des Sensors zur redundanten Erfassung eines Moments ausgebildet sind oder für die redundante Erfassung eines Moments mindestens zwei Sensoren vorgesehen sind und dass redundante Auswerteeinrichtungen zur redundanten Auswertung vorgesehen sind, und wobei eine Einrichtung zum Abschalten des Roboters oder zum Einleiten eines sicheren Zustandes vorgesehen ist, wenn durch die mindestens zwei Sensoren erfasste Messwerte des gleichen Moments sich über einen vorgegebenen Toleranzbereich hinaus unterscheiden, und wobei die zwei Sensoren in Form von Dehnungsmessstreifen aufweisenden Vollbrücken derart an einem Getriebe des Roboters angeordnet sind, dass sie das gleiche auftretende Moment erfassen und jeweils mit zwei Recheneinheiten in Form von zueinander diversitär ausgebildeten integrierten Schaltkreisen, die Mikro-Controller aufweisen, innerhalb einer Sendeeinheit verbunden sind, in der eine erste Überprüfung der gemessenen Momentenwerte erfolgt.

Ein gattungsgemäßes Verfahren sieht zur Lösung der genannten Aufgabe vor, dass mindestens ein Moment an mindestens einem beweglichen Teil mittels mindestens zweier Sensorkomponenten eines Sensors oder mittels zweier Sensoren redundant erfasst und redundant ausgewertet wird, der Roboter abgeschaltet wird, wenn durch die zwei Sensoren erfasste Messwerte der gleichen Messgröße "Moment" sich über einen vorgegebenen Toleranzbereich hinaus unterscheiden, wobei die zwei Sensoren in Form von Dehnungsmessstreifen aufweisenden Vollbrücken derart an einem Getriebe des Roboters angeordnet sind, dass sie das gleiche auftretende Moment erfassen und jeweils mit zwei Recheneinheiten in Form von zueinander diversitär ausgebildeten integrierten Schaltkreisen, die Mikro-Controller aufweisen, innerhalb einer Sendeeinheit verbunden sind, in der eine erste Überprüfung der gemessenen Momentenwerte erfolgt.

Die Erfassung der Messwerte kann direkt oder auch indirekt erfolgen. Die redundante Ausgestaltung der erfindungsgemäßen Vorrichtung nach dem erfindungsgemäßen Verfahren ist derart, dass den Anforderungen SIL 2 und SIL 3 gemäß der Norm DIN EN 61508 bzw. der Performance Level PL d und PL e der DIN EN ISO 13849-1:2006 genügen.

Dadurch, dass erfindungsgemäß ein Roboter mit mindestens zwei Sensoren zur zweifachen Erfassung ein und desselben Moments als Messgröße ausgebildet ist bzw. ein Sensor mindestens zwei Sensorkomponenten zur Erfassung ein und desselben Moments als Messgröße aufweist, wird die Voraussetzung geschaffen, dass im Weiteren durch eine Auswerteeinheit schon die richtige Funktion der Sensoren bzw. Sensorkomponenten überwacht werden kann und im Übrigen die gesamte weitere Verarbeitung der durch die Sensoren gemessenen Messwerte der Messgröße "Moment".

Die Erfindung beinhaltet also die redundante und vorzugsweise diversitäre Messung jeweils ein und desselben Moments als Messgröße.

Die Verarbeitung der Messwerte erfolgt durch geeignete Recheneinheiten, wobei solche Mikro-Prozessoren oder - Controller, aber auch Digitalsignalprozessoren oder Feldprogrammierbare Gate Arrays sein können. Da die Einrichtungen zur Messwerteverarbeitung erfindungsgemäß regelmäßig zweikanalig und damit redundant ausgebildet sind, ist in bevorzugter Ausgestaltung vorgesehen, dass die vorgenannte Recheneinheit diversitär ausgebildet sind, d.h. sie kann zwar von einem Hersteller, nicht aber aus der gleichen Serie stammende Mikro-Prozessoren oder Controller, vorzugsweise aber beispielsweise solche unterschiedlicher Hersteller in den verschiedenen Zweigen aufweisen.

Gemäß einer Ausgestaltung der Erfindung kann dabei zur Erhöhung der Sicherheit vorgesehen sein, dass insbesondere die Sensoren unterschiedlich ausgebildet sind, sei es, dass derartige Momentensensoren bei gleichem Messprinzip von unterschiedlichen Herstellern stammen, sei es, dass sie auf unterschiedlichen Messprinzipien beruhen, wie beispielsweise opto-elektrische Sensoren oder den Motorstrom überwachende Sensoren. In bevorzugter Ausgestaltung ist vorgesehen, dass ein Sensor mindestens einen Dehnungsmessstreifen als Sensorkomponente aufweist, da mit solchen in einfacher Art Momente erfasst werden können.

Bevorzugte Weiterbildungen der Erfindung sehen dabei vor, dass Sensorkomponenten als mindestens zwei Messbrücken verschaltet sind, wobei insbesondere eine Messplatte eine Vollbrücke, insbesondere eine Wheatstone Wende-Brücke ist und/oder, dass mindestens eine Messbrücke eine Halbbrücke ist.

Eine bevorzugte Ausgestaltung zeichnet sich aus durch eine Überwachungseinrichtung zur Überwachung einer VersorgungsSpannung an mindestens einem Sensor.

Dies ist insbesondere sinnvoll, wenn Sensoren in Form einer Halbbrücke mit einem Dehnungsstreifen eingesetzt werden. Bei der Abweichung der Versorgungsspannung von einem Sollwert kann der Roboter vorsorglich abgeschaltet werden. Alternativ kann der Messwert des Momentensensors abhängig von der Versorgungsspannung umgerechnet werden.

Die Versorgungsspannung der Messbrücken kann unterschiedlieh ausgeprägt werden, um Diversität zu erzeugen. So können Sensoren so angeordnet werden, dass ihre Wirkungen entgegengesetzt sind. Die Summe beider Signale bleibt dann konstant. So kann z.B. ein Signal einer Sinus-Funktion entsprechen, das andere einer Cosinus-Funktion oder allgemein ein Phasenversatz zwischen ihnen bestehen. Auch können die Signale im Hinblick auf Diversität unterschiedliche Frequenz und/oder Amplitude haben. Vor einer Analog-Digital-Wandlung erfolgt eine Signalfilterung.

Weiter sieht die Erfindung eine Temperaturüberwachung vor, mittels derer überwacht wird, dass die Temperatur innerhalb eines vorgegebenen Bereichs liegt und bei Verlassen des Bereichs den Roboter abschaltet. Bei der Auswertung der Momentensensoren wird die aktuelle Temperatur berücksichtigt.

Eine konkrete Weiterbildung des Erfindungsgedankens zeichnet sich aus durch mindestens eine Vergleichseinrichtung zum Vergleich der durch mindestens zwei Sensorkomponenten oder Sensoren erfassten Messwerte des gleichen Moments. Eine derartige Vergleichseinrichtung ist vorzugsweise sensornah, also in unmittelbarer Nähe der Sensoren am Manipulator angeordnet.

Zusätzlich oder alternativ kann neben einer Überwachung von Momentengrenzwerten auch vorgesehen sein, dass gemessene Werte mit sich aus einem Model für die jeweilige Situation ergebenden Werten verglichen werden. Hierdurch können zum Erkennen von Sensorfehlern Plausibilitätsbetrachtungen durchgeführt werden.

Darüber hinaus kann vorgesehen sein, dass Referenzpositionen des Roboters angefahren und/oder Referenzbewegungen durchgeführt werden und die Funktionalität von Sensoren bei diesen überprüft wird.

Zur Reaktion auf eine Fehlererkennung in der Sensor- und Bearbeitungskette sieht die Erfindung eine Einrichtung zum Abschalten des Roboters oder zum Einleiten eines sicheren Zustandes vor, wenn durch mindestens zwei Sensorkomponenten oder Sensoren erfasste Messwerte des gleichen Moments sich über einen vorgegebenen Toleranzbereich hinaus unterscheiden.

Die Verarbeitung der Messwerte erfolgt durch geeignete Recheneinheiten, wobei solche Mikro-Prozessoren oder - Controller, aber auch Digitalsignalprozessoren oder Feldprogrammierbare Gate Arrays sein können. Da die Einrichtungen zur Messwerteverarbeitung erfindungsgemäß regelmäßig zweikanalig und damit redundant ausgebildet sind, ist in bevorzugter Ausgestaltung vorgesehen, dass die vorgenannte Recheneinheit diversitär ausgebildet sind, d.h. sie kann zwar von einem Hersteller, nicht aber aus der gleichen Serie stammende Mikro-Prozessoren oder Controller, vorzugsweise aber beispielsweise solche unterschiedlicher Hersteller in den verschiedenen Zweigen aufweisen.

Während zur Übertragung grundsätzlich vorgesehen sein kann, dass das Übertragen der Daten mit einer Prüfkennzahl, mit einer Prüfziffer versehen werden, sieht eine bevorzugte Ausgestaltung der Erfindung darüber hinaus vor, dass Messwerte analog oder digital über mindestens zwei Kanäle an eine Recheneinheit übertragen werden.

Die Überprüfung von Signale empfangenden Eingängen kann durch Querschlusstests und/oder Zweikanaligkeitsprüfungen durchgeführt werden.

Schließlich liegt es im Rahmen der Erfindung, dass die in den parallel arbeitenden Recheneinheiten eingesetzte Software diversitär ausgebildet ist, d.h. zumindest über unterschiedliche Compiler kompiliert wurde. Soweit für beide Rechner ein Programm erstellt wurde, ist dieses nach dem Vier-Augen-Prinzip zu überprüfen; vorzugsweise sind aber Programme eingesetzt, die unabhängig voneinander entwickelt wurden. Zur Realisierung sicherer Ausgänge der Recheneinheiten werden Signalrückführung und Testpulse vorgesehen.

Die gesamte Messwertverarbeitung erfolgt in Echtzeit. Dies beinhaltet, dass der Roboter abgeschaltet wird bzw. rechtzeitig eine geeignete Gegenmaßnahme eingeleitet wird, bevor eine Gefahrensituation für einen Menschen entsteht. Der Roboter kann aber erst abgeschaltet werden, wenn eine Gefahrensituation bzw. Fehlverhalten erkannt wurde. Das System benötigt Zeit, um eine Gefahrensituation zu erkennen und eine geeignete Reaktion einzuleiten. Die Dauer, wie lange eine Gefahr bzw. in der ein Moment unkontrolliert wirken darf, legt fest, in welcher Zeit ein Roboter abgeschaltet bzw. eine Gefahr behoben werden muss. Liegt beispielsweise eine Fehlfunktion vor und wird einem Roboter unkontrolliert Energie zugeführt, kann der Roboter Energie aufbauen, bis eine geeignete Reaktion eingeleitet ist. Die Zeit, bis eine geeignete Reaktion eingeleitet werden muss, hängt davon ab, wie schnell einem System Energie zugeführt werden kann und welcher maximale Wert akzeptabel ist.

Weitere Vorteile und Merkmale der Erfindung ergeben sich aus den Ansprüchen aus der nachfolgenden Beschreibung, in der Ausführungsbeispiele der Erfindung unter Bezugnahme auf die Zeichnungen im Einzelnen erläutert sind. Dabei zeigt bzw. zeigen:

**Fig. 1** einen erfindungsgemäßen Roboter in schematischer Darstellung;

**Fig.2a,b** einen erfindungsgemäß zur Momentenüberwachung einsetzbaren Dehnungsmessstreifen in Draufsicht (Fig. 2a) und dessen Anordnung an einem Bauteil (Fig. 2b);

**Fig. 3** einen anderweitigen Dehnungsmessstreifen mit drei Abgriffspunkten, integriert in eine Halbbrücke;

**Fig.4a,b** einen Sensor in Form einer Halbbrücke mit zwei Dehnungsmessstreifen (Fig. 4a) und eine Anordnung an einem Bauteil (Fig. 4b);

**Fig. 5** einen Sensor in Form einer Vollbrücke;

**Fig. 6** ein Blockschaltbild der erfindungsgemäß vorgesehenen Momentenüberwachung;

**Fig. 7** ein detailliertes Blockschaltbild der Sendeeinheit der Figur 6 zum Generieren eines sicheren Protokolls zur Übertragung der Messdaten;

**Fig. 8** ein Ablaufdiagramm zum erfindungsgemäßen Verfahren der Momentenüberwachung.

**Fig.9a,b** schematische Darstellungen der Anordnung von Dehnungsmessstreifen an zwischen zwei Ringen befindlichen Stegen, von denen einer den anderen mitnimmt, bei der Fig. 9a ohne Moment, bei der Fig. 9b mit Moment;

**Fig. 10a,b** Vollmessbrücken zur Verschaltung der Dehnungsmessstreifen der Fig. 9a und 9b; und

**Fig. 11** eine Brückenschaltung zur Bestimmung einer der Messbrücken der Fig. 10a, 10b, um ungleiche Querspannungen im Falle keines Moments zu erreichen.

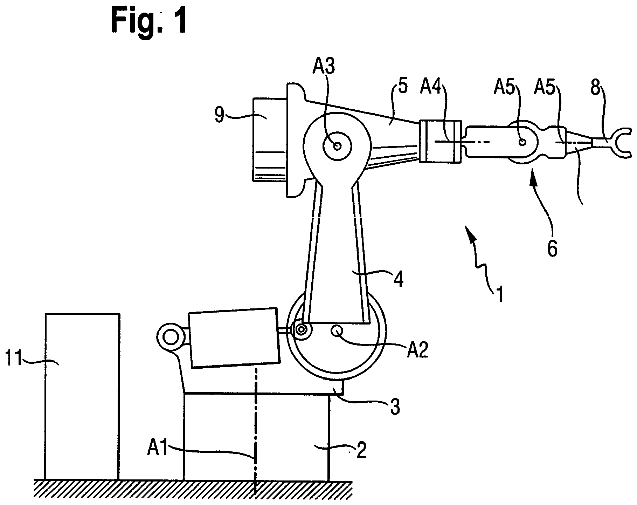

Ein in Fig. 1 dargestellter erfindungsgemäßer Roboter in Form eines Gelenkroboters weist einen automatisch gesteuerten, frei programmierbaren Mehrzweck-Manipulator 1 auf, der in drei oder mehr Achsen programmierbar ist, sowie ein Steuergerät Ziff. 11, gegebenenfalls einschließlich eines Programmierhandgeräts sowie Kommunikationsschnittstellen (gemäß EN ISO 10218-1 Ziff. 3.18 bzw. EN ISO 8373 Ziff. 2.6), wobei der Einsatz nicht auf die Automatisierungstechnik beschränkt ist.

Der Roboter, genauer der automatisch gesteuerte, frei programmierbare Mehrzweck-Manipulator 1 hat einen festen Sockel oder eine feste Basis 2, die ein Karussell 3 trägt, das um eine vertikale A1-Achse drehbar ist. Ein Roboterarm weist eine Schwinge oder einen Oberarm 4 auf, der um eine horizontale A2-Achse schwenkbar an dem Karussell 3 angelenkt ist. Der Oberarm 4 trägt, ebenfalls um eine horizontale A3-Achse schwenkbar, einen Unterarm 5. An dem Unterarm 5 ist eine Roboterhand 6 befestigt, die dreiteilig ausgebildet ist, wobei die Teile jeweils um eine Achse A4, A5 bzw. A6 drehbar sind. Die Achsen überschneiden sich vorzugsweise im sogenannten Handgelenkspunkt auf der Achse A5. Das freie Ende des Handteils 7 (um die A6-Achse drehbar) ist mit einem Werkzeug 8 versehen.

Die Teile der Hand 6 werden durch drei Motoren 9 bewegt. Die Bewegung der anderen Roboterteile 3, 4, 5 um die Achsen A1, A2 bzw. A3 erfolgt durch nicht dargestellte Antriebsmotoren über Getriebe. Diese Getriebe sind mit Momentensensoren versehen, beispielsweise in Form von optischen Momentensensoren entsprechend beispielsweise der EP 1 291 616 A2 oder aber in Form bzw. mit Dehnungsmessstreifen.

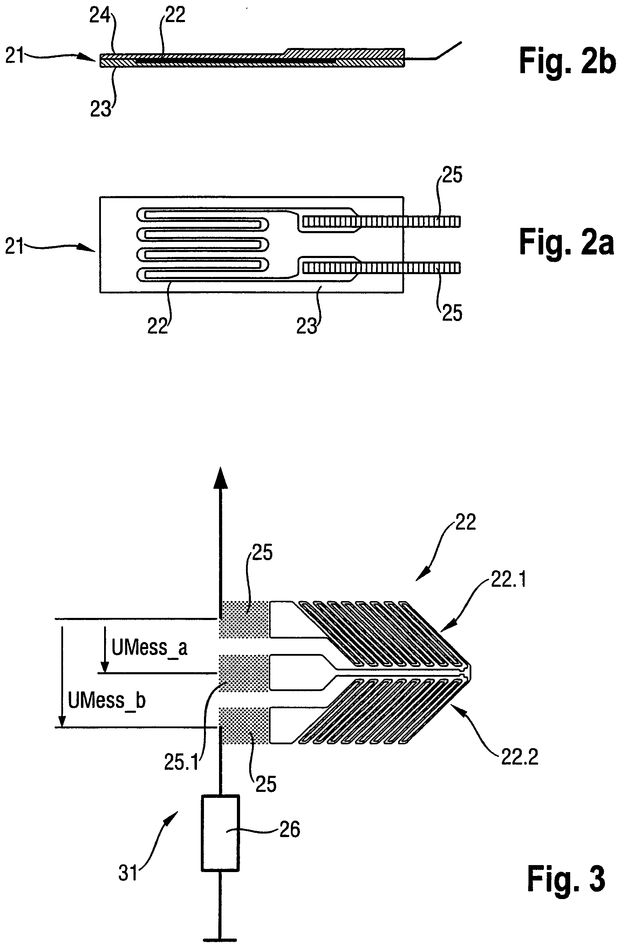

Bei der bevorzugten dargestellten Ausführungsform ist dabei wesentlich, dass jeweils ein auftretendes Moment zweifach erfasst wird, entweder durch zwei Komponenten eines Sensors, wie zwei (gegebenenfalls zusammen mit weiteren Widerständen) einen Sensor bildende Dehnungsmessstreifen oder aber durch zwei das gleiche Moment erfassenden Sensoren, wobei diese dann vorzugsweise unterschiedliche Sensoren sind, also Sensoren, die nach unterschiedlichen Messprinzipien arbeiten, wie einerseits ein auf der Basis von Dehnungsmessstreifen arbeitender Sensor und andererseits ein opto-elektrischer Sensor, so dass das entsprechende Moment also diversitär erfasst wird. Die Fig. 2a und 2b zeigen beispielhaft einen Dehnungsmessstreifen 21, bei dem ein mäanderförmig geführter Messwiderstand 22 auf einem elektrisch isolierenden Träger 23 und unter einer elektrisch isolierenden Abdeckung 24, vorzugsweise aus dem gleichen Material, angeordnet ist, beispielsweise in Dickschichttechnik, auf den Träger gedruckt oder dergleichen.

Der Messwiderstand 22 ist mit elektrischen Anschlüssen 25 versehen, über welche er mit Spannung versorgt und über welche die am Messwiderstand 22 jeweils abfallende Messspannung abgegriffen werden kann. Durch eine mechanische Verformung erfolgt eine Widerstandsänderung und damit eine Änderung des Spannungsabfalls über den Widerstand 22, wodurch auf die die Verformung bedingte Ursache, im vorliegenden Fall einwirkende Momente, rückgeschlossen werden kann.

Der Dehnungsmessstreifen 21 der Fig. 3 ist doppelmäanderförmig, wobei zwischen den beiden Mäanderbereichen 22.1 22.2 ein Mittelabgriff mit einem zusätzlichen elektrischen Anschluss 25.1 gegeben ist. Der gesamte Messwiderstand oder Dehnungsmessstreifen 22 ist mit einem konstanten ohmschen Widerstand 26 unter Bildung einer Halbbrücke in Reihe geschaltet und Spannungen können über den gesamten Widerstand, damit die beiden Anschlüsse 25, oder aber zwischen einem der Anschlüsse 25 und dem Mittelabgriff 25.1 abgegriffen werden.

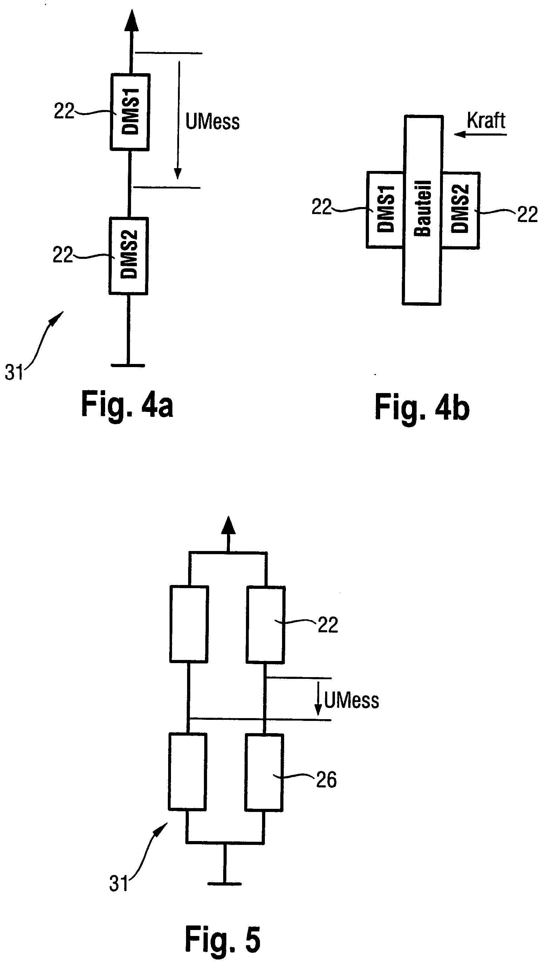

Die Fig. 4a, 4b zeigen eine Halbbrücke mit zwei Dehnungsmessstreifen, beispielsweise solchen der Fig. 2a, 2b in Reihe geschaltet. In der Fig. 4b ist dargestellt, wie derartige eine Halbbrücke bildende Dehnungsmessstreifen 22 beiderseits eines Bauteils in einer Weise angebracht werden, dass sich ihre Effekte ergänzen.

Die Fig. 5 zeigt schließlich einen Sensor in Form einer Vollbrücke, wobei zumindest einer der dargestellten vier Widerstände als Dehnungsmessstreifen ausgebildet ist, vorzugsweise mehrere, während zumindest ein anderer ein fester ohmscher Widerstand 26 ist.

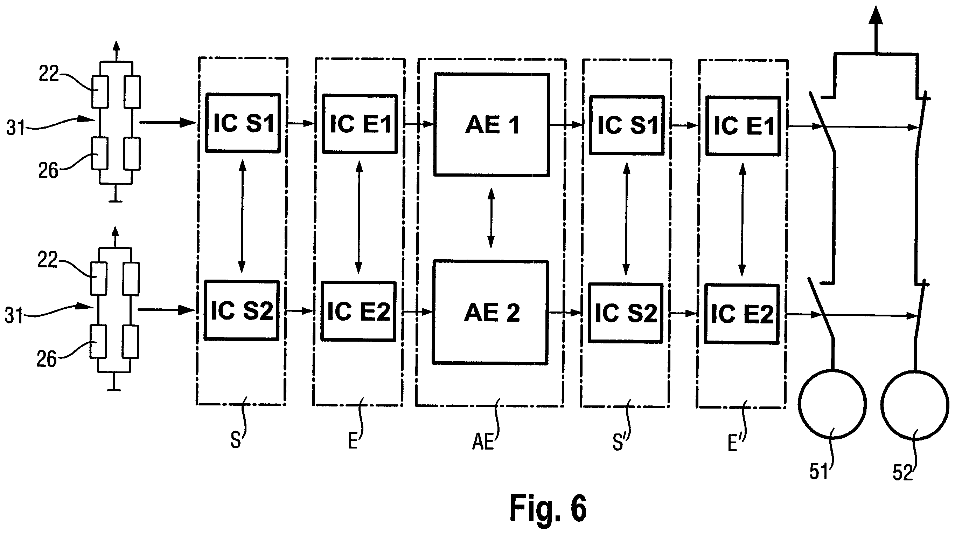

Die Fig. 6 zeigt außer den zwei Sensoren 31 in Form von Dehnungsmessstreifen 22 aufweisenden Vollbrücken den Teil einer Steuerung des erfindungsgemäßen Roboters, soweit dieser die Momentenüberwachung betrifft.

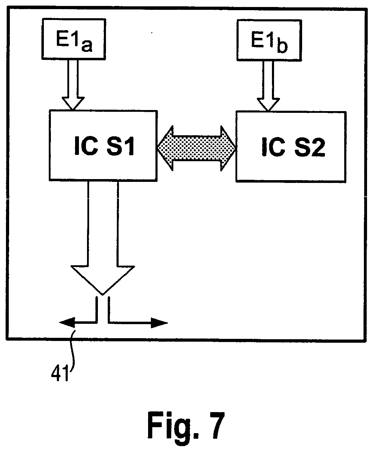

Die in der Fig. 6 dargestellten Sensoren 31 sind derart an einem Getriebe angeordnet, dass sie das gleiche auftretende Moment erfassen. Sie sind jeweils mit zwei Recheneinheiten S1, S2 in Form von integrierten Schaltkreisen (ICs), die Mikro-Controller aufweisen, innerhalb einer Sendeeinheit S verbunden. In der Sendeeinheit S erfolgt eine erste Überprüfung der gemessenen Momentenwerte, wie dies in der Fig. 7 dargestellt ist.

Zur Erhöhung der Sicherheit sind die ICs S1, S2 zueinander diversitär ausgebildet, d.h. sie haben z.B. unterschiedliche Typen von Mikro-Controllern, sei es eines gleichen Herstellers, sei es unterschiedlicher Hersteller, nicht aber von gleichen Typen ein und der gleichen Serie. Hierdurch wird die Wahrscheinlichkeit und damit die Gefahr vermindert, dass beide in der gleichen Situation konstruktionsbedingt den gleichen Rechenfehler in einer Berechnung machen.

Die empfangenen Eingangssignale $E1_a$, $E1_b$ werden beiden ICs S1, S2 zugeleitet, die diese jeweils zunächst miteinander dahingehend vergleichen, ob sie gleich sind bzw. zumindest den gleichen Momenten-Messwert repräsentieren. Ist dies der Fall, erzeugen beide ICs S1, S2 mit den die Momenten-Messwerte repräsentierenden Eingangssignalen ein sicheres Kommunikationsprotokoll und versehen dieses mit einer Prüfsumme.

Anschließend vergleichen beide ICs S1, S2 beide Protokolle miteinander. Ist auch hier Übereinstimmung gegeben, so sendet mindestens einer der ICs über eine Sendeschnittstelle 41 das Protokoll an eine Empfangseinheit E der Steuereinheit 11 (Fig. 6). Die Sicherheit der Übertragung ist durch die Mitübertragung der Prüfkennziffer bzw. Prüfsumme sichergestellt. Mehrere in Fig. 6 einzeln dargestellte Mikro-Controller können auch in einer Einheit zusammengefasst bzw. integriert ausgebildet sein.

Tritt bei einem der vorgenannten Überprüfungsschritte, sei es hinsichtlich der Eingangs-Messsignale, sei es hinsichtlich der erzeugten Protokolle eine Differenz auf, so wird eine Fehlerbehandlungs-Routine initiiert durch Übertragen einer Fehlermeldung und insbesondere wird das Übersenden des Protokolls unterbunden, wobei der IC, im dargestellten Beispiel S1, der selbst nicht sendet, den anderen IC S2, am versenden des Protokolls hindern kann. Das Protokoll wird an eine Empfangseinheit E übertragen. Der das Protokoll unmittelbar entgegennehmende IC E2 der Empfangseinheit E übergibt das Protokoll als solches an den weiteren IC E1 der Empfangseinheit E. Beide ICs E1, E2 überprüfen die Integrität der Protokolle anhand der mitübermittelten Prüfkennzahl und geben die in den Protokollen enthaltenen Momenten-Messwerte an eine Auswerteeinheit AE, die zwei Unterauswerteeinheiten AE1, AE2 aufweist. Diese führen die Auswertung der erhaltenen Messergebnisse durch, diese übergeben jeweils einander und vergleichen die Auswertungen miteinander. Sie geben jeweils ein Steuersignal an Prozessoren S1', S2' einer Sendeeinheit S', die grundsätzlich in gleicher Weise aufgebaut sein kann, wie die der Fig. 7, die Überprüfungen und Abgleiche durchführt. Steuerbefehle werden in Form eines mit einer Prüfkennzahl versehenen Protokolls an eine Bremsen 51 und Antrieben 52 zugeordneten Empfangseinheit E' mit ICs E1', E2' übermittelt, die ebenfalls wiederum einen Vergleich der empfangenen Signale durchführen und an Bremsen 51 und Antriebe 52 übergeben.

Soweit bei den vorgenommenen Vergleichen in den einzelnen Einheiten Übereinstimmung gegeben ist, so wird der normale Betrieb des Roboters ausgeführt. Ergeben sich Divergenzen, so wird der Roboter gestoppt, um Schäden zu vermeiden.

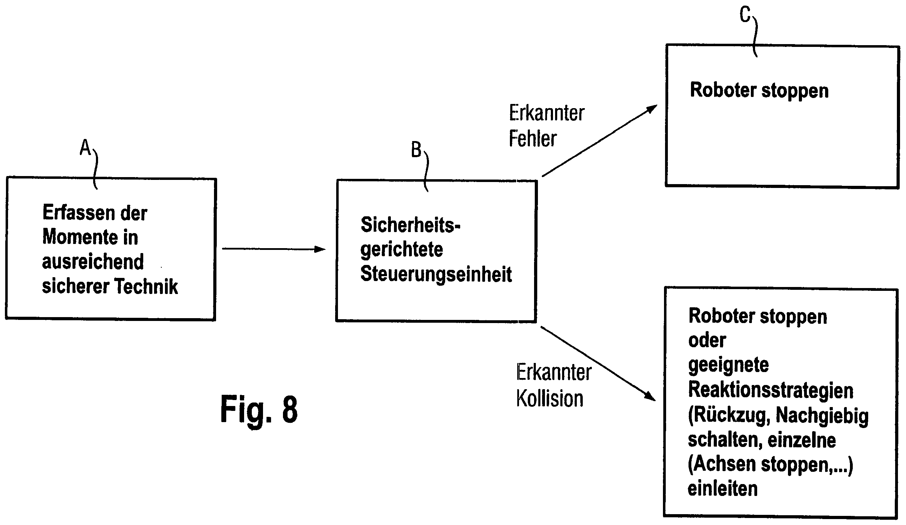

Der erfindungsgemäße Ablauf ist noch einmal in der Fig. 8 dargestellt.

Im Schritt A erfolgt ein Erfassen der Momente in der beschriebenen zweikanaligen, vorzugsweise diversitären Weise, insbesondere über unterschiedliche Messprinzipien und unterschiedliche Messschaltungen. Im Schritt B erfolgt eine sicherheitsgerichtete Steuerung ebenfalls mit zweikanaliger, vorzugsweise diversitärer Auswertung in, wie gesagt, physikalisch unterschiedlichen Komponenten (Prozessoren) gleicher Bauteile aus verschiedenen Serien des gleichen Herstellers oder unterschiedlicher Hersteller eingesetzt werden. Wird ein Fehler erkannt, so erfolgt im Schritt C ein Stoppen des Roboters.

Erfolgt die Verarbeitung der gemessenen Momentenwerte korrekt, nehmen diese aber einen zu großen oder zu kleinen Wert an, der eine Kollision bedeutet, so wird im Schritt B eine geeignete Reaktionsstrategie eingeleitet, die im Stoppen des gesamten Roboters, einzelner Achsen, im Rückzug des Roboters oder im nachgiebigen Schalten der Achsen liegen kann.

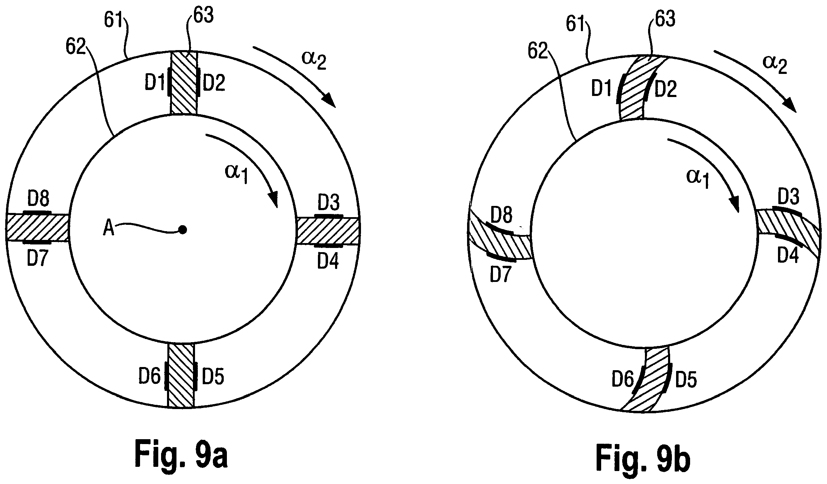

Fig. 9a zeigt zwei Ringe 61, 62, die, solange kein Moment einwirkt, radial gerichtet sind und an denen, einander gegenüberliegend, in Bewegungsrichtung auf der Vorder- und auf der Rückseite dieses Stegs 63 Dehnungsmessstreifen D1, D2, D3, D4, D5, D6, D7, D8 aufgebracht sind. Bei der Darstellung der Fig. 9a wirkt kein Moment. Bei der Darstellung der Fig. 9b ist der äußere Ring 61 angetrieben und nimmt über die Stege 63 den inneren Ring 62 mit, so dass Momente einwirken.

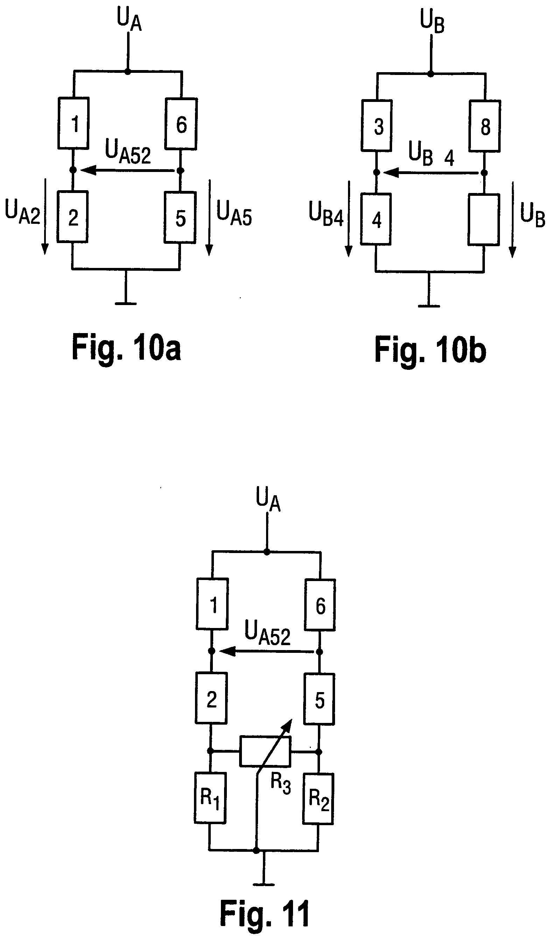

In den Fig. 10a und 10b ist die Verschaltung der Dehnungsmessstreifen D1, D2, D5, D6 einerseits und D3, D4, D7, D8 andererseits zu Vollbrücken dargestellt, an denen Spannungen $U_A$ bzw. $U_B$ liegen, die einerseits als angelegte Spannungen bekannt sind und damit auch der Auswerteeinheit bekannt sind und andererseits unterschiedlich gewählt werden, wobei im Folgenden angenommen wird, dass der Betrag von $U_B$ größer als der Betrag von $U_A$ ist.

$$U_{A2}/U_A - U_{B4}/U_B = \pm E_1 \qquad (1)$$

$$U_{A5}/U_A - U_{B7}/U_B = \pm E_2 \qquad (2),$$

wobei $U_{B7} > U_{A5}$ und $U_{B4} > U_{A2}$. Dann gilt:

$$U_{A52} = U_{A5} - U_{A2} \qquad (3)$$

$$U_{A52} - U_{B74} = \pm E_3 \qquad (4)$$

Verglichen werden dabei nicht Spannungen, sondern den Spannungen zugeordnete Momente.

Wenn die Brückenschaltung abgeglichen ist und kein Moment wirkt, sind $U_{A52} = 0$ und $U_{B74} = 0$. In diesem Falle können $U_{A52}$ und $U_{B74}$ nicht überwacht werden.

Dem kann abgeholfen werden und eine Überwachung ermöglicht werden, indem zumindest eine Brückenschaltung gewollt verstimmt wird, so dass bei maximalem Moment $U_{A52}$ und $U_{B74}$ nicht beide Null werden können. Für eine solche Abstimmung sind in Fig. 11, die dann die Fig. 10a ersetzt, in Reihe zu den Dehnungsmessstreifen D2 bzw. D5 zusätzliche Festwiderstände $R_1$, $R_2$ und zwischen den Verbindungen ein Potentiometer $R_3$ (parallel zu $U_{A52}$) angeordnet, mittels dessen die Verstimmung vorgenommen werden kann.

Alternativ können die Dehnungsmessstreifen auch bei vorgespannter Mechanik aufgebracht werden und zwar die Dehnungsmessstreifen D1, D2, D5, D6 bei maximal positiven Moment und die Dehnungsmessstreifen D3, D4, D7, D8 bei maximal negativen Moment. Somit sind $U_{A52}$ und $U_{B74}$ dann, wenn kein Moment wirkt, ungleich Null.

Die Messung wird insbesondere derart durchgeführt, dass die angelegten Spannungen $U_A$ und $U_B$ gepulst werden und eine Überprüfung auf Querschluss vorgenommen wird.

**Bezugszeichenliste**

| | |
|---|---|
| 1 | Mehrzweck-Manipulator |
| 2 | feste Basis |
| 3 | Karussell |
| 4 | Oberarm |
| 5 | Unterarm |
| 6 | Roboterhand |
| 7 | Handteil |
| 8 | Werkzeug |
| 9 | Motoren |
| 11 | Steuereinheit |
| 21 | Dehnungsmessstreifen |
| 22 | Messwiderstand |
| 23 | Träger |
| 24 | Abdeckung |
| 25 | elektrische Anschlüsse |
| 26 | Widerstand |
| 31 | Sensoren |
| 41 | Sendeschnittstelle |
| 51 | Bremsen |
| 52 | Antriebe |
| 61, 62 | Ringe |
| 63 | Stege |
| | |
| A1 bis A6 | Achsen |
| AE1, AE2 | Auswerteeinheit |
| D1-D8 | Dehnungsmessstreifen |
| E | Empfangseinheit |
| E1, E2 | ICs |
| E1', E2' | Controller |
| $E1_a$, $E1_b$ | Eingangssignale |
| $R_1$, $R_2$ | Festwiderstände |
| $R_3$ | Potentiometer |
| S | Sendeeinheit |
| S1, S2 | ICs |
| S1', S2' | Prozessoren |

**Patentansprüche**

1. Roboter mit mindestens zwei Gelenken und über jeweils mindestens ein Gelenk relativ zueinander bewegliche Teile, wobei mindestens ein Momente erfassender Sensor (31) an mindestens einem beweglichen Teil (3, 4, 5', 6, 7) angeordnet ist, und wobei für die redundante Erfassung eines Moments zwei Sensoren (31) und redundante Auswerteeinrichtungen zur redundanten Auswertung vorgesehen sind, und wobei eine Einrichtung zum Abschalten des Roboters oder zum Einleiten eines sicheren Zustandes vorgesehen ist, wenn durch die mindestens zwei Sensoren (31) erfasste Messwerte des gleichen Moments sich über einen vorgegebenen Toleranzbereich hinaus unterscheiden, **dadurch gekennzeichnet, dass** die zwei Sensoren (31) in Form von Dehnungsmessstreifen (22) aufweisenden Vollbrücken derart an einem Getriebe des Roboters angeordnet sind, dass sie das gleiche auftretende Moment erfassen und jeweils mit zwei Recheneinheiten (S1, S2) in Form von zueinander diversitär ausgebildeten integrierten Schaltkreisen, die Mikro-Controller aufweisen, innerhalb einer Sendeeinheit (S) verbunden sind, in der eine erste Überprüfung der gemessenen Momentenwerte erfolgt.

2. Roboter nach Anspruch 1, **dadurch gekennzeichnet, dass** die zueinander diversitär ausgebildeten integrierten Schaltkreise unterschiedliche Typen von Mikro-Controllern aufweisen.

**3.** Roboter nach einem der vorangehenden Ansprüche, **dadurch gekennzeichnet, dass** Sensorkomponenten (21', 22.1, 22.2.) als mindestens zwei Messbrücken verschaltet sind.

**4.** Roboter nach einem der vorangehenden Ansprüche, **gekennzeichnet durch** eine Referenzeinrichtung zum Anfahren von Referenzpositionen des Roboters und/oder Durchführen von Referenzbewegungen und Überprüfen der Funktionalität von Sensoren (31) bei diesen.

**5.** Roboter nach einem der vorangehenden Ansprüche, **gekennzeichnet durch** eine Überwachungseinrichtung zur Überwachung einer Versorgungsspannung an mindestens einem Sensor (31).

**6.** Roboter nach einem der vorangehenden Ansprüche, **gekennzeichnet durch**

- mindestens eine Vergleichseinrichtung zum Vergleichen der durch mindestens zwei Sensorkomponenten (21', 22.1, 22.2.) oder Sensoren (31) erfassten Messwerte des gleichen Moments,
- eine Überwachungseinrichtung zum Überwachen von Momenten-Grenzwerten,
- eine Einrichtung zum Vergleichen gemessener Momentenwerte mit sich aus einem Modell für die jeweilige Situation ergebenden Werte, und/oder
- Mikro-Prozessoren, Mikro-Controller (MC), Digitalsignalprozessoren (DSP) und/oder Feldprogrammierbaren Gate Arrays (field programmable gate arrays - FPGA).

**7.** Verfahren zum Überwachen von Momenten an einem Roboter, der mindestens zwei Gelenke und über jeweils mindestens ein Gelenk relativ zueinander bewegliche Teile (3,4, 5',6, 7) aufweist, wobei mindestens ein Moment an mindestens einem beweglichen Teil (3, 4, 5', 6, 7) mittels zweier Sensoren (31) redundant erfasst und redundant ausgewertet wird, der Roboter abgeschaltet wird, wenn durch die zwei Sensoren (31) erfasste Messwerte der gleichen Messgröße "Moment" sich über einen vorgegebenen Toleranzbereich hinaus unterscheiden, wobei die zwei Sensoren (31) in Form von Dehnungsmessstreifen (22) aufweisenden Vollbrücken derart an einem Getriebe des Roboters angeordnet sind, dass sie das gleiche auftretende Moment erfassen und jeweils mit zwei Recheneinheiten (S1, S2) in Form von zueinander diversitär ausgebildeten integrierten Schaltkreisen, die Mikro-Controller aufweisen, innerhalb einer Sendeeinheit (S) verbunden sind, in der eine erste Überprüfung der gemessenen Momentenwerte erfolgt.

**8.** Verfahren nach Anspruch 7, **dadurch gekennzeichnet, dass** die Versorgungsspannung mindestens eines Sensors (31) überwacht wird.

**9.** Verfahren nach einem der Ansprüche 7 oder 8, **dadurch gekennzeichnet, dass** Referenzpositionen des Roboters angefahren und/oder Referenzbewegungen durchgeführt werden und die Funktionalität von Sensoren (31) bei diesen überprüft wird.

**10.** Verfahren nach einem der Ansprüche 7 bis 9, **dadurch gekennzeichnet, dass** die Werte zwischen Signalerfassung und Auswertung über ein sicheres Kommunikationsprotokoll verschickt werden.

**11.** Verfahren nach einem der Ansprüche 7 bis 10, **dadurch gekennzeichnet, dass**

- ein Moment durch unterschiedlich ausgebildete Sensorkomponenten (21', 22.1, 22.2.) oder Sensoren (31) diversitär erfasst wird,
- ein Moment durch mindestens einen Dehnungsmessstreifen als Sensorkomponente (21', 22.1, 22.2.) erfasst wird,
- ein Moment über in mindestens zwei Messbrücken verschaltete Sensorkomponenten (21', 22.1, 22.2.) erfasst wird, wobei jeweils mindestens eine der Messbrücken eine Halbbrücke und/oder eine Vollbrücke ist,
- durch mindestens zwei Sensorkomponenten (21', 22.1, 22.2.) oder Sensoren (31) erfasste Messwerte des gleichen Moments miteinander verglichen werden,
- Momentengrenzwerte überwacht werden,
- gemessene Momentenwerte mit sich aus einem Modell für die jeweilige Situation ergebenen Werte verglichen werden,
- gewonnene Messwerte durch Recheneinheiten in Form von Mikro-Prozessoren, -Controller, Digitalsignalprozessoren (DSB) und/oder geldprogrammierbare Gate Arrays (field programmable gate arrays - FPGA) verarbeitet werden, und/oder
- Messwerte analog oder digital über mindestens zwei Kanäle an eine Recheneinheit übertragen werden.

**Claims**

1. A robot having at least two joints and parts that are movable relative to each other by means of at least one joint respectively, wherein at least one sensor (31) detecting torques is arranged on at least one movable part (3, 4, 5', 6, 7), and wherein for the redundant detection of a torque two sensors (31) and redundant evaluation units are provided for redundant evaluation and wherein a device is provided for switching off the robot or for triggering a safe state, if measurements of the same torque detected by the at least two sensors (31) differ from one another beyond a predefined tolerance range,
   **characterised in that** the two sensors (31) in the form of full bridges comprising strain gauges (22) are arranged on a gear of the robot such that they detect the same torque and by means of two computer units (S1, S2), in the form of diversely designed integrated circuits comprising microcontrollers, are connected inside a transmitting unit (S) in which a first check of the measured torque values is performed.

2. The robot according to claim 1, **characterised in that** the diversely configured integrated circuits comprise different types of microcontrollers.

3. The robot according to any of the preceding claims, **characterised in that** sensor components (21', 22.1, 22.2) are connected as at least two measurement bridges.

4. The robot according to any of the preceding claims, **characterised by** a reference device for approaching reference positions of the robot and/or performing reference movements and checking the functionality of sensors (31) at the latter.

5. The robot according to any of the preceding claims, **characterised by** a monitoring device for monitoring a supply voltage to at least one sensor (31).

6. The robot according to any of the preceding claims, **characterised by**

   - at least one comparator for comparing the measurement values of the same torque detected by at least two sensor components (21', 22.1, 22.2) or sensors (31),
   - a monitoring device for monitoring torque thresholds,
   - a device for comparing measured torque values with values resulting from a model for the respective situation and/or
   - microprocessors, microcontrollers (MC), digital signal processors (DSP) and/or field programmable gate arrays (FPGA).

7. A method for monitoring torques on a robot which comprises at least two joints and parts (3, 4, 5', 6, 7) movable relative to one another by means of at least one joint, wherein at least one torque is detected as redundant and is evaluated as redundant on at least one movable part (3, 4, 5', 6, 7) by means of two sensors (31), the robot is switched off if the measurement values of the same measurement variable "torque" detected by the two sensors (31) differ over a predefined tolerance range, wherein the two sensors (31) in the form of full bridges comprising strain gauges (22) are arranged on a gear of the robot such that they detect the same torque and by means of two computer units (S1, S2), in the form of diversely designed integrated circuits comprising microcontrollers, said sensors are connected inside a transmitting unit (S) in which a first check of the measured torque values is performed.

8. The method according to claim 7, **characterised in that** the supply voltage of at least one sensor (31) is monitored.

9. The method according to any of claims 7 or 8, **characterised in that** the reference positions of the robot are approached and/or reference movements are performed and the functionality of sensors (31) at the latter is checked.

10. The method according to any of claims 7 to 9, **characterised in that** the values between signal detection and evaluation are despatched by a secure communication protocol.

11. The method according to any of claims 7 to 10, **characterised in that** the

    - a torque is detected diversely by differently designed sensor components (21', 22.1, 22.2) or sensors (31),
    - a torque is detected by at least one strain gauge as a sensor component (21', 22.1, 22.2),
    - a torque is detected by sensor components (21', 22.1, 22.2) connected in at least two measurement bridges, wherein at least one of the measurement bridges is a half-bridge and/or a full bridge respectively,
- measurements of the same torque detected by means of at least two sensor components (21', 22.1, 22.2) or sensors (31) are compared with one another,
- torque thresholds are monitored,
- measured torque values are compared with values resulting from a model of the respective situation,
- obtained measurement values are processed by computer units in the form of microprocessors, controllers, digital signal processors (DSB) and/or field programmable gates arrays (FRGA) and/or
- measurement values are transmitted in analogue or digital mode via at least two channels to a computer unit.

**Revendications**

1. Robot comportant au moins deux articulations et des pièces relativement mobiles les unes par rapport aux autres par l'intermédiaire d'au moins une articulation respective, au moins un capteur (31) détectant des couples étant agencé sur au moins une partie mobile (3, 4, 5', 6, 7) et, pour la détection redondante d'un couple, deux capteurs (31) et des dispositifs d'évaluation redondants étant prévus pour l'évaluation redondante, et un dispositif étant prévu pour interrompre le robot ou pour initier un état sécurisé lorsque les valeurs de mesure du même couple, détectées par lesdits au moins deux capteurs (31), se distinguent au-delà d'une plage de tolérance prédéterminée, **caractérisé en ce que** les deux capteurs (31), sous forme de ponts intégraux présentant des jauges de contrainte (22), sont agencés de telle sorte sur une transmission du robot qu'ils détectent le même couple qui se produit et qu'ils sont reliés avec deux unités de traitement respectives (S1, S2) sous forme de circuits intégrés réalisés avec diversité l'un par rapport à l'autre, qui présentent des microcontrôleurs, à l'intérieur d'une unité d'émission (S) dans laquelle est effectué une première vérification des valeurs de couple mesurées.

2. Robot selon la revendication 1, **caractérisé en ce que** les circuits intégrés réalisés avec diversité l'un par rapport à l'autre présentent différents types de microcontrôleurs.

3. Robot selon l'une des revendications précédentes, **caractérisé en ce que** des composants de capteurs (21', 22.1, 22.2) sont connectés en tant qu'au moins deux ponts de mesure.

4. Robot selon l'une des revendications précédentes, **caractérisé par** un dispositif de référence pour aborder des positions de référence du robot et/ou pour effectuer des mouvements de référence et pour vérifier la fonctionnalité de capteurs (31) lors de ceux-ci.

5. Robot selon l'une des revendications précédentes, **caractérisé par** un dispositif de surveillance pour surveiller une tension d'alimentation sur au moins un capteur (31).

6. Robot selon l'une des revendications précédentes, **caractérisé par**

   - au moins un dispositif de comparaison pour comparer les valeurs de mesures du même couple, détectées par au moins deux composants de capteur (21', 22.1, 22.2) ou deux capteurs (31),
   - un dispositif de surveillance pour surveiller des valeurs limites de couple,
   - un dispositif pour comparer des valeurs de couple mesurées avec des valeurs résultant d'un modèle pour la situation respective, et/ou
   - des microprocesseurs, des microcontrôleurs (MC), des processeurs de signal numérique (DSP) et/ou des circuits logiques programmables (field programmable gate arrays - FPGA).

7. Procédé de surveillance de couples sur un robot qui présente au moins deux articulations et des pièces (3, 4, 5', 6, 7) relativement mobiles les unes par rapport aux autres par l'intermédiaire d'au moins une articulation respective, au moins un couple étant détecté de manière redondante et évalué de manière redondante sur au moins une pièce (3, 4, 5', 6, 7) mobile au moyen de deux capteurs (31), le robot étant arrêté lorsque des valeurs de mesures de la même variable mesurée "couple", détectées par les deux capteurs (31) se distinguent au-delà d'une plage de tolérance prédéterminée, les deux capteurs, sous forme de ponts intégraux présentant des jauges de contrainte (22), étant agencés de telle sorte sur une transmission du robot qu'ils détectent le même couple qui se produit et qu'ils sont reliés avec deux unités de traitement respectives (S1, S2) sous forme de circuits intégrés réalisés avec diversité l'un par rapport à l'autre, qui présentent des microcontrôleurs, à l'intérieur d'une unité d'émission (S) dans laquelle est effectuée une première vérification des valeurs de couple mesurées.

**8.** Procédé selon la revendication 7, **caractérisé en ce que** la tension d'alimentation d'au moins un capteur (31) est surveillée.

**9.** Procédé selon l'une des revendications 7 ou 8, **caractérisé en ce que** les positions de référence du robot sont abordées et/ou des mouvements de référence sont effectués et la fonctionnalité de capteurs (31) lors de ceux-ci est vérifiée.

**10.** Procédé selon l'une des revendications 7 à 9, **caractérisé en ce que** les valeurs entre la détection de signaux et l'évaluation sont envoyées via un protocole de communication sûr.

**11.** Procédé selon l'une des revendications 7 à 10, **caractérisé en ce que**

- un couple est détecté avec diversité par des composants de capteurs (21', 22.1, 22.2) ou des capteurs (31) réalisés différemment,
- un couple est détecté par au moins une jauge de contrainte servant de composant de capteur (21', 22.1, 22.2),
- un couple est détecté par des composants de capteurs (21', 22.1, 22.2) connectés dans au moins deux ponts de mesure, au moins un des ponts de mesure étant un demi-pont et/ou un pont complet, respectivement,
- des valeurs de mesure du même couple, détectées par au moins deux composants de capteurs (21', 22.1, 22.2) ou deux capteurs (31) sont comparées les unes aux autres,
- des valeurs limites de couple sont surveillées,
- des valeurs de couple mesurées sont comparées à des valeurs résultant d'un modèle pour la situation respective,
- des valeurs de couple mesurées, qui sont obtenues, sont traitées par des unités de traitement sous forme de microprocesseurs, microcontrôleurs, processeurs de signal numérique (DSB) et/ou des circuits logiques programmables (field programmable gate arrays - FPGA), et/ou
- des valeurs de mesure sont transmises de manière analogique ou numérique à une unité de traitement par au moins deux canaux

# Fig. 1

**Fig. 2b**

**Fig. 2a**

**Fig. 3**

**Fig. 4a**

**Fig. 4b**

**Fig. 5**

**Fig. 6**

EP 2 231 369 B1

**Fig. 7**

**C**

Roboter stoppen

**A**

Erfassen der
Momente in
ausreichend
sicherer Technik

**B**

Sicherheitsgerichtete
Steuerungseinheit

Erkannter
Fehler

Erkannter
Kollision

Roboter stoppen
oder
geeignete
Reaktionsstrategien
(Rückzug, Nachgiebig
schalten, einzelne
(Achsen stoppen,...)
einleiten

# Fig. 8

Fig. 9a

Fig. 9b

**Fig. 10a**          **Fig. 10b**

**Fig. 11**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1445075 A2

- EP 1291616 A2